# EUROPEAN PATENT APPLICATION

(11) **EP 4 300 374 A1**
(43) Date of publication of application: **03.01.2024**
(21) Application number: 23164073.1
(22) Date of filing: 24.03.2023
(51) Int. Cl.: G06N 3/084, G06N 3/045, G06N 3/0464, G06V 10/774

(54) **TRAINING PROGRAM, METHOD FOR TRAINING, AND INFORMATION PROCESSING APPARATUS**

(30) Priority: 27.06.2022 JP 2022102664
(71) Applicant: FUJITSU LIMITED, Kawasaki-shi, Kanagawa 211-8588 (JP)
(72) Inventor: TAKEMOTO, Kentaro, Kawasaki-shi, Kanagawa, 211-8588 (JP)
(74) Representative: Hoffmann Eitle

(57) **Abstract**

An estimator 200 is trained through a metric learning that determines a positive example training data and a negative example training data from among a plurality of training data used to train the estimator 200, brings a feature corresponding the particular label calculated in relation to the positive example training data close to a feature corresponding the particular label calculated in relation to the reference data, and moves a feature corresponding the particular label calculated in relation to the negative example training data away from the feature corresponding the particular label calculated in relation to the reference data.

## Description

### [Technical Field]

The embodiment discussed herein relates to a training program, a method for training, and an information processing apparatus.

### [Background Technique]

A technique has been known that uses a computer system to recognize (estimate) articles and a relationship between the articles in an image. Such a technique of image recognition can be applied to, for example, behavior recognition and abnormality detection by referring to images from cameras in town, generation of an operation logs in a factory, and generation summary of a long moving image. Articles include a subject and an object. A relationship represents a relationship between a subject and an object (i.e., between articles). The articles (i.e., subject and object) and the relationship between these articles may be referred to as a triplet.

In relation to an image including a man swinging a bat and a ball, the "man", the "ball", and "hit" can be respectively recognized to be the subject, the object, and the relationship, respectively, for example. In this example, the triplet consists of a man, a bat, and hit. Alternatively, in relation to the same image, the "man", the "ball", and "swing" can be respectively recognized to be the subject, the object, and the relationship, respectively. In this alternative, the triplet consists of a man, a bat, and swing.

In a technique to recognize a triplet, it is important to accurately recognize a triplet in an image.

One of known conventional techniques has detected all the triplets in an image, estimated a predetermined number of triplets with a triplet estimator, and narrowed valid triplets.

### [Related Art Reference]

### [Patent Document]

[Patent Document 1] Japanese Laid-open Patent Publication No. 2019-8778
[Patent Document 2] Japanese National Publication of International Patent Application No. 2005-535952
[Patent Document 3] U.S. Unexamined Patent Application Publication No. 2020/0167772
[Patent Document 4] Japanese Laid-open Patent Publication No. 2022-19988
[Patent Document 5] Japanese Laid-open Patent Publication No. 2010-33447

### [Non-Patent Document]

[Non-Patent Document 1] Bumsoo Kim, and other six persons, "HOTR: End-to-End Human-Object Interaction Detection with Transformers", [online] , April 28, 2022, CVPR2021, [retrieved on May 17, 20221 , Internet <URL: openaccess.thecvf.com/content/CVPR2021/papers/Kim_HOTR_End-to-End_Human-Object_Interaction_Detection_With_Transformers_CVPR_2021_pap er.pdf>

### [Summary of Invention]

### [Problem to be Solved by Invention]

However, in such a method for estimating a triplet has lower accuracy in recognition of a triplet to be recognized is not present in training data, which means recognition of an unknown triplet, as compared with a case where a triplet to be recognized in relation to verifying data has been present in the training data.

This inconvenience is caused because, in estimating a relationship, a triplet estimator predicates the relationship from the types of articles without considering detailed characteristics in the image.

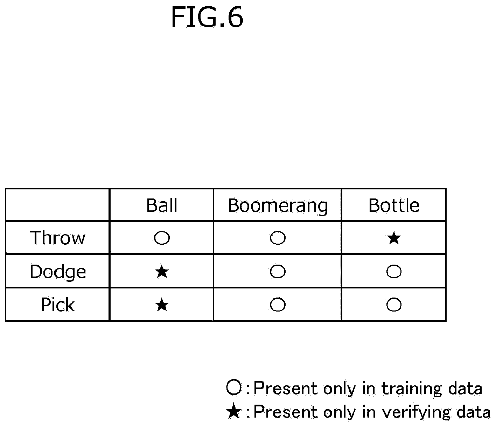

FIG. 6 is a diagram illustrating the presence of a triplet in training data and verifying data.

FIG. 6 indicates that a combination of each of the three relationships of "throw", "dodge", "pick" and each of the three objects of "ball", "boomerang" is present in either the training data or the verifying data. For convenience, the subject is limited to "man" in all the combinations in FIG. 6.

In the example of FIG. 6, the training data includes an image in which a man "throws" a "ball" and an image in which a man "throws" a "boomerang", but does not include an image in which a man "throws" a "bottle". On the contrary, the verifying data does not include an image in which a man "throws" a "ball" and an image in which a man "throws" a "boomerang", but does include an image in which a man "throws" a "bottle".

If a triplet estimator is trained (machine-learned) using training data of FIG. 6 and detects a man and a ball present at a little metric (distance) in an image, machine learning is carried out so as to predicate that the man and the ball has a relationship of "throw". On the other hand, unless the relationship of "throw" itself is correctly recognized from an image, the estimator is unable to correctly recognize an unexpected state such as "throwing a bottle".

### [SUMMARY]

As one aspect, the object of the present invention is to enhance the accuracy of a triplet estimator.

### [Means to Solve Problem]

According to an aspect of the embodiments, a training program for causing a computer to execute a process for training an estimator that estimates, from a feature of an entire part of an image, a first label indicating a subject included in the image, a second label indicating an object included in the image, and a third label indicating a relationship between the subject and the object.

The process includes: determining, among a plurality of pieces of training data to be used for training the estimator, positive example training data having the first label, the second label, and the third label, a particular label of the first label, the second label, and the third label of the positive example training data coinciding with a particular label of reference data included in the plurality of pieces of training data, at least one label of the first label, the second label, and the third label of the positive example training data except for the particular label not coinciding with a corresponding label of the reference data; and determining a negative example training data having the first label, the second label, and the third label among a plurality of pieces of training data, the particular label of the negative example training data not coinciding with the particular label of the reference data and labels of the negative example training data except for the particular label coinciding with corresponding labels of the reference data.

The process further includes executing metric learning on the estimator, the metric learning bringing a feature corresponding the particular label calculated in relation to the positive example training data close to a feature corresponding the particular label calculated in relation to the reference data and moving a feature corresponding the particular label calculated in relation to the negative example training data away from the feature corresponding the particular label calculated in relation to the reference data.

### [Effect of Invention]

According to the one embodiment, the accuracy of a triplet estimator can be enhanced.

### [Brief Description of Drawings]

FIG. 1 is a diagram schematically illustrating a functional configuration of an information processing apparatus according to an example of an embodiment;
FIG. 2 is a diagram illustrating a hardware configuration of the information processing apparatus according to an example of the embodiment;
FIG. 3 is a diagram illustrating a process performed by a metric learning controlling unit of the information processing apparatus according to an example of the embodiment;
FIG. 4 is a diagram illustrating a process performed by a metric learning controlling unit of the information processing apparatus according to an example of the embodiment;
FIG. 5 is a flow diagram illustrating a process performed by a training processing unit of the information processing apparatus according to an example of the embodiment; and
FIG. 6 is a diagram illustrating the presence of a triplet in training data and verifying data.

### [Description of Embodiment(S)]

Hereinafter, a training program, a method for training, and an information processing apparatus according to an embodiment will now be described with reference to the accompanying drawings. However, the following embodiment is merely illustrative and is not intended to exclude the application of various modifications and techniques not explicitly described in the embodiment. Namely, the present embodiment can be variously modified and implemented without departing from the scope thereof. Further, each of the drawings can include additional functions not illustrated therein to the elements illustrated in the drawing.

### (A) Configuration:

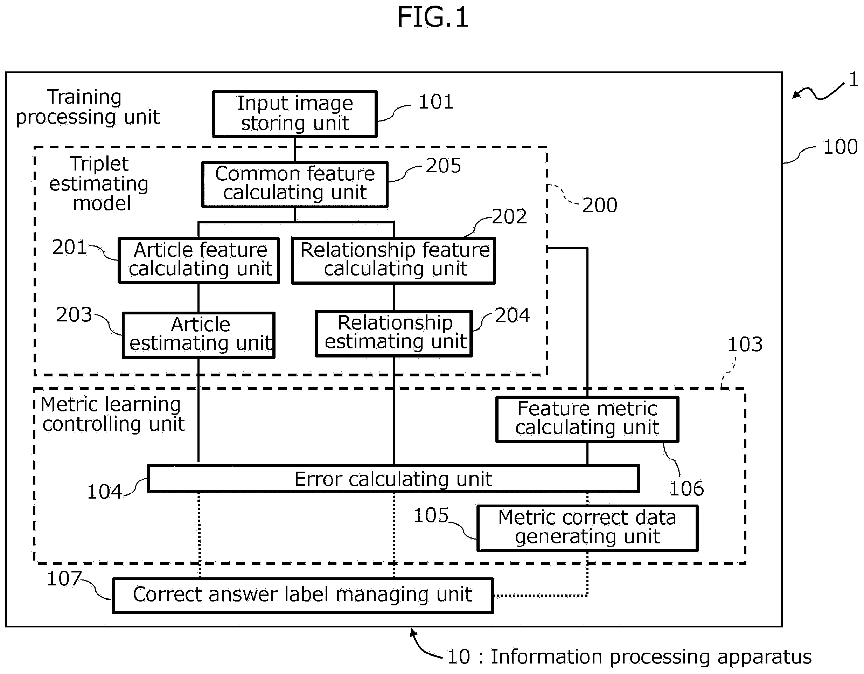

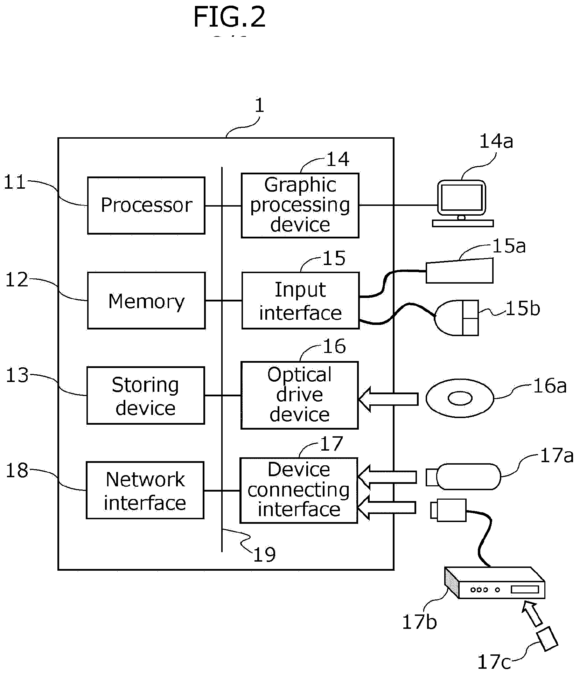

FIG. 1 is a diagram schematically illustrating a functional configuration of an information processing system 1 according to an example of an embodiment; and FIG. 2 is a diagram illustrating a hardware configuration of an information processing apparatus 1 included in the information processing system 1 according to an example of the embodiment.

As illustrated in FIG. 2, the information processing apparatus 10 includes, for example, a processor 11, a memory 12, a storing device 13, a graphic processing device 14, an input interface 15, an optical drive device 16, a device connecting interface 17, and a network interface 18. These components 11-18 are communicably connected to one another via a bus 19.

The processor (controller 11) controls the entire information processing apparatus 10. The processor 11 may be a multiprocessor. The processor 11 may be any one Central Processing Units (CPUs), Micro Processing Units (MPUs), Digital Signal Processors (DSPs), Application Specific ICs (ASICs), Programmable Logic Devices (PLDs) and Field Programmable Gate Arrays (FPGAs), or combinations of two or more of these ICs. The processor 11 may be a Graphics Processing Unit (GPU).

When executing a controlling program (training program, Operating System (OS) program), the processor 11 functions as a training processing unit 100 illustrated in FIG. 1.

For example, when executing a program (training program, OS program) stored in a non-transitory computer-readable recording medium, the information processing apparatus 10 exerts the function of the training processing unit 100.

For example, when executing a program (triplet estimating program, OS program) stored in a non-transitory computer-readable recording medium, the information processing apparatus 10 may exert the function of t a triplet estimating model 200, for example.

A program that describes a processing content that the information processing apparatus 10 is caused to execute may be recorded in various recording medium. For example, the program that the information processing apparatus 10 is caused to execute can be stored in the storing device 13. The processor 11 loads at least part of the program in the storing device 13 to the memory 12 and executes the loaded program.

Alternatively, the program that the information processing apparatus 10 (processor 11) is caused to execute can be stored in a non-transitory portable recording medium such as an optical disk 16a, a memory device 17a or a memory card 17c. The program stored in a portable recording medium may be installed in the storing device 13 under control of the processor 11, for example, and then comes to be executable. The processor 11 may read the program directly from the portable recording medium.

The memory 12 is a storing memory including a Read Only Memory (ROM) and a Random Access Memory (ROM). The RAM of the memory is used as the main storing device of the information processing apparatus 10. In the RAM, some of the program that the processor 11 is caused to execute are temporarily stored. Furthermore, in the memory 12, various data are required for processing by the processor 11 is stored.

The storing device 13 is a storing device such as a Hard Disk Drive (HDD), a Solid State Drive (SSD), and a Storage Class Memory (SCM), and stores various types of data. The storing device 13 is used as an auxiliary storing device of the information processing apparatus 10. In the storing device 13, the OS program, the controlling program, and various types of data are stored. The controlling program includes the training program and the triplet estimating program. Training data (input images) may be stored in the storing device 13.

Alternatively, an example of the auxiliary storing device may be a semiconductor memory such as an SCM and a flash memory. Furthermore, Redundant Arrays of Inexpensive Disks (RAID) may be configured by using multiple storing devices 13.

The storing device 13 or the memory 12 may store various types of data generated while a training processing unit 100 and a triplet estimating model 200 that are to be described below execute processes.

To the graphic processing device 14, a monitor 14a is connected. The graphic processing device 14 displays an image on the screen of the monitor 14a in obedience to an instruction from the processor 11. Examples of the monitor 14a are a Cathode Ray Tube (CRT) displaying device and a liquid crystal display.

To the input interface 15, a keyboard 15a and a mouse 15b are connected. The input interface 15 transmits signals from the keyboard 15a and the mouse 15b to the processor 11. The mouse 15b is an example of a pointing device and may be replaced with another pointing device, which is exemplified by a touch panel, a tablet computer, a touch pad, and a track ball.

The optical drive device 16 reads data recorded in the optical disk 16a by using laser light, for example. The optical disk 16a is a non-transitory portable recording medium in which data is readably recorded by utilizing light reflection. Examples of the optical disk 16a includes a Digital Versatile Disc (DVD), a DVD-RAM, a Compact Disc Read Only Memory (CD-ROM), and a CD-R/RW (Recordable/ReWritable).

The device connecting interface 17 is a communication interface to connect a peripheral device to the information processing apparatus 10. For example, to the device connecting interface 17, a memory device 17a and a memory reader/writer 17b can be connected. The memory device 17a is a non-transitory recording medium mounted with a communication function with the device connecting interface 17 and is exemplified by a Universal Serial Bus (USB) memory. The memory reader/writer 17b writes and reads data into and from a memory card 17c, which is a card-type non-transitory recording medium.

The network interface 18 is connected to a network. The network interface 18 transmits and receives data through a network. To the network, another information processing apparatus and a communication device may be connected.

The information processing system 1 has functions as a triplet estimating model 200 and a training processing unit 100.

The triplet estimating model 200 estimates a triplet (i.e., subject, object, and relationship) from an inputted image.

The triplet estimating model 200 corresponds to an estimator that estimates, from a feature of an entire part of an image, a first label indicating a subject included in the image, a second label indicating an object included in the image, and a third label indicating a relationship between the subject and the object.

Among inputted images, one or more inputted images that are to be used for training (machine learning) the triplet estimating model 200 in a training phase may be referred to as training data. Furthermore, among the inputted images, one or more inputted images that are to be inputted into the triplet estimating model 200 in an inference phase (operating phase) may be referred to as verifying data.

As illustrated in FIG. 1, the triplet estimating model 200 includes a common feature calculating unit 205, an article feature calculating unit 201, a relationship feature calculating unit 202, an article estimating unit 203, and a relationship estimating unit 204.

The common feature calculating unit 205 calculates a feature based on an inputted image. An inputted image is multiple pieces of training data in a training phase, and a correct answer label is prepared for each pieces of the training data. An inputted image is verifying data in an inference phase. No correct answer label is set for verifying data.

The common feature calculating unit 205 calculates feature for each inputted image. The method for calculating a feature is not limited to a particular one, may be any of the known methods.

The common feature calculating unit 205 may be include a neural network model. A neural network execute a forward process (forward propagation process) that inputs input data into an input layer, sequentially executes predetermined calculation in a hidden layer consisting of a convolution layer and a pooling layer, and sequentially propagates information obtained by the calculation from the input side to the output side.

A neural network may be hardware circuitry or a virtual network achieved by means of software that connects layers virtually constructed on a computer program by a processor 11 (see FIG. 2).

The common feature calculating unit 205 may calculate a feature in any known method such as Scale-Invariant Feature Transform (SIFT) or Histograms of Oriented Gradients (Hog).

To calculate a feature of an inputted image may also referred to as "featuring". Furthermore, a feature of an inputted image that the common feature calculating unit 205 calculates may be referred to as a common feature.

The article feature calculating unit 201 calculates a feature effective to estimation of an article (subject and object) on the basis of a common feature that the common feature calculating unit 205 calculates for each inputted images. The function of the article feature calculating unit 201 is known and the description thereof is omitted here.

The article feature calculating unit 201 may be an encoder using a deep learning model and may include a neural network model.

A feature that the article feature calculating unit 201 estimates and is used to estimate an article may be referred to as an article feature. Among article features, one used to estimate a subject may be referred to as a subject feature, and one used to estimate an object may be referred to as an object feature.

The article feature calculating unit 201 may determine a subject feature and an object feature by using, for example, any know method for selecting a feature.

An article feature (i.e., subject feature and object feature) that the article feature calculating unit 201 calculates is inputted into the article estimating unit 203. In addition, an article feature (i.e., subject feature and object feature) that the article feature calculating unit 201 calculates is also inputted into the metric learning controlling unit 103.

The relationship feature calculating unit 202 calculates a feature effective to estimation of a relationship on the basis of a feature (common feature) that the common feature calculating unit 205 calculates. The function of the relationship feature calculating unit 202 is known and the description thereof is omitted here.

The relationship feature calculating unit 202 may be an encoder using a deep learning model and may include a neural network model.

A feature that the relationship feature calculating unit 202 calculates and is used to estimate a relationship may be referred to as a relationship feature.

The relationship feature calculating unit 202 may determine a relationship feature using, for example, any known method for selecting a feature.

Hereinafter, not discriminating an article feature (i.e. subject feature and object feature) from a relationship feature, these features may simply referred to as features.

A relationship feature that the relationship feature calculating unit 202 calculates is inputted into the relationship estimating unit 204. In addition, a relationship feature that the relationship feature calculating unit 202 calculates is also inputted into the metric learning controlling unit 103.

The article estimating unit 203 estimates an article (i.e., subject and object) among a triplet from an inputted image. Into the article estimating unit 203, an article feature that the article feature calculating unit 201 calculates is inputted, and the article estimating unit 203 estimates an article (i.e., subject and object) in the inputted image, using the article feature as an input. The function of the article estimating unit 203 can be achieved by any known method and the description thereof is omitted here.

The relationship estimating unit 204 estimates a relationship among a triplet from an input image. Into the relationship estimating unit 204, a relationship feature that the relationship feature calculating unit 202 calculates is inputted, and the relationship estimating unit 204 estimates a relationship in the inputted image, using the relationship feature as an input. The function of the relationship estimating unit 204 can be achieved by any known method and the description thereof is omitted here.

An inputted image (training data) may be received from another information processing apparatus connected through a network.

As illustrated in FIG. 1, the training processing unit 100 has functions of an input image storing unit 101, a metric learning controlling unit 103, and a correct answer label managing unit 107.

The input image storing unit 101 stores an inputted image into a predetermined storing region of the storing device 13, for example. The input image storing unit 101 stores multiple pieces of training data in the storing device 13. The correct answer label managing unit 107 manages a correct answer label of an article (i.e., subject and object) and a correct answer label of a relationship. These answer labels may be prepared for each inputted image.

These correct answer labels of an article and a relationship are stored in a predetermined storing region of the storing device 13, for example.

The correct answer label managing unit 107 compares (confront) an article that the article feature calculating unit 201 of the triplet estimating model 200 estimates with the correct answer label of the article. Furthermore, the correct answer label managing unit 107 compares a relationship that the relationship feature calculating unit 202 estimates with the correct answer label of the relationship.

The correct answer label managing unit 107 notifies the results of the comparisons to the error calculating unit 104 of the metric learning controlling unit 103.

The metric learning controlling unit 103 execute metric learning on a feature of one element (any of subject, object, and relationship) desired to be improved among three types of feature (subject feature, object feature, and relationship feature) outputted from the triplet estimating model 200.

The metric learning controlling unit 103 selects, as reference training data, one from among multiple pieces of training data. Reference training data may be selected in any known method. For example, the metric learning controlling unit 103 may randomly select reference training data from among multiple pieces of training data. The triplet in the reference training data may be referred to as a reference triplet and a reference triplet may be referred to as reference data.

To select single piece of training data as reference training data from among the multiple pieces of training data and obtain a reference triplet from the selected reference training data may be referred to as selecting a reference triplet from training data.

Among the elements (i.e., subject, object, and relationship) constituting a reference triplet R, an element to be improved is represented by R_a and the remaining elements are represented by R_b.

Among the elements constituting a reference triplet R, an element to be improved R_a may be referred to as an improvement target element R_a, and the elements R_b except for the improvement target element R_a may be referred to as not-improved target element.

The value of an improvement target element R_a may be represented by R_a and the value of a not-improved target element R_b may be represented by R_b.

The value of an improvement target element R_a corresponds to a particular label among a first label indicating a subject, a second label indicating an object, and a third label indicating a relationship. The values of not-improved target elements correspond to labels except for the particular label among the first label indicating a subject, the second label indicating an object, and the third label indicating a relationship.

Furthermore, the feature of an improvement target element R_a may be referred to as a feature a and the feature of a not-improved target element R_b may be referred to as a feature b. This feature a and feature b may be calculated by the article feature calculating unit 201 or the relationship feature calculating unit 202.

The metric learning controlling unit 103 selects, as a positive example triplet, a piece of training data including a triple R' that satisfies R_a=R' _a and also R_b≠R' _b in relation to the reference triplet R from the multiple training data. Training data including such a positive example triplet may be referred to as positive example training data.

The term R'_a represents the value of an improvement target element of a positive example triplet, and term R'_b represents the value of a not-improved target element of the positive example triplet.

The metric learning controlling unit 103 selects, as a negative example triplet, a piece of training data including a triple R" that satisfies R_a≠R"_a and also R_b=R" _b in relation to the reference triplet R from the multiple training data. Training data including such s negative example triplet may be referred to as negative example training data.

The term R"_a represents the value of an improvement target element of a negative example triplet, and term R"_b represents the value of a not-improved target element of the negative example triplet.

Actually, since a not-improved target elements consists of two elements, R_b≠R'_b represents that one or the both not-improved target elements are different from those of the reference triplet.

If any of a subject, an object, and a relationship is selected as an improvement target element, no undesired effect occurs on the accuracy in estimating the remaining elements. For the above, the accuracy in estimating an overall triplet is the most enhanced by sequentially or alternately combining the metric learning of the respective elements for the estimation.

In selecting positive/negative example triplets, the triplets may be included in the same image of the reference training data (image) that includes the reference triplet or may be included in another image.

The metric learning controlling unit 103 carries out metric learning such that the feature a of the improvement target element of a positive example triplet R' comes closer to the feature a of an improvement target element of the reference triplet R.

The metric learning controlling unit 103 carries out metric learning such that the feature a of the improvement target element of a positive example triplet R' moves away from the feature a of an improvement target element of the reference triplet R. The metric learning controlling unit 103 does not treat the feature b of a not-improved target element. This means that the metric learning controlling unit 103 carries out the metric learning not on all the three types of features in a triplet but only on a feature related to an improvement target element.

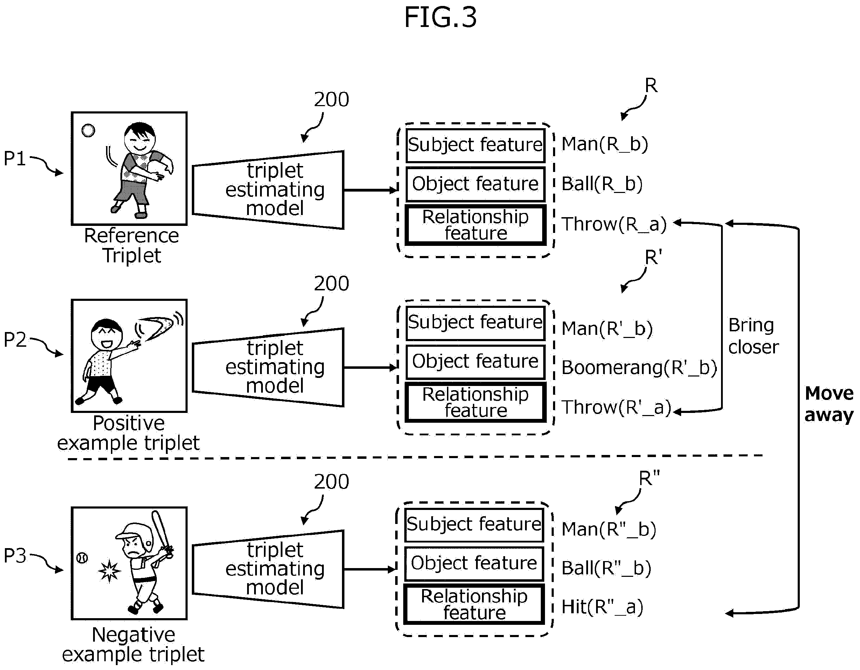

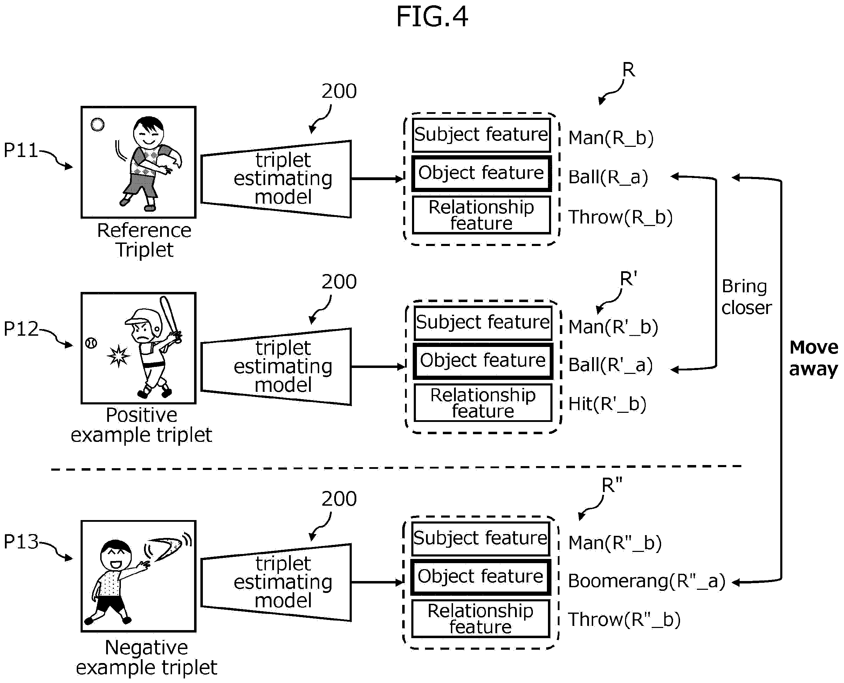

FIG. 3 and 4 are diagrams illustrating processes performed by the metric learning controlling unit 103 of the information processing apparatus 10 according to an example of the embodiment.

The element desired to be improved is the relationship in the example of FIG. 3 and the subject in the example of FIG. 4.

In the example of FIG. 3, the triplet estimating model 200 estimates that the subject is "man", the object is "ball", and the relationship is "throw" in an inputted image P1. This triplet is regarded as the reference triplet. The inputted image P1 is regarded as the reference training data.

In estimating of the triplet estimating model 200, the article estimating unit 203 estimates that the subject is "man" and the object is "ball" on the basis of a subject feature that the article feature calculating unit 201 calculates. Likewise, the relationship estimating unit 204 estimates that the relationship is "throw" on the basis of a relationship feature that the relationship feature calculating unit 202 calculates.

As described above, in the reference triplet R of the inputted image P1, the relationship corresponds to the improvement target element R_a and the subject and the object correspond to the not-improved target element R_b. This means that the value of the improvement target element R_a is "throw" and the value the not-improved target element R_b is "man" and "ball".

In the example of FIG. 3, in the triplet R' that the triplet estimating model 200 estimates in relation to an inputted image P2, the subject is estimated to be "man", the object is estimated to be "boomerang", and the relationship is estimated to be "throw".

Here, the value of the improvement target element R'_a is "throw" and therefore matches the value "throw" of the improvement target element R_a of the reference triplet (R_a=R'_a).

On the other hand, the value of the not-improved target element is a combination of "man" and "boomerang", and therefore does not match the combination of "man" and "ball" of the improvement target element R_b of the reference triplet (R_b^R'_b).

Accordingly, the triplet R' that the triplet estimating model 200 estimates in relation to an inputted image P2 is determined (selected) as a positive example.

In the example of FIG. 3, in the triplet R" that the triplet estimating model 200 estimates in relation to an inputted image P3, the subject is estimated to be "man", the object is estimated to be "ball", and the relationship is estimated to be "hit".

Here, the value of the improvement target element R"_a is "hit" and therefore does not match the value "throw" of the improvement target element R_a of the reference triplet (R_a≠R"_a).

The value R"_b of the not-improved target element is a combination of "man" and "ball", and therefore match the combination of "man" and "ball" of the improvement target element R_b of the reference triplet (R_b=R"_b).

Accordingly, the triplet R" that the triplet estimating model 200 estimates in relation to an inputted image P3 is determined (selected) as a negative example.

The metric learning controlling unit 103 carries out metric learning such that the relationship feature of the improvement target element R'_a of the positive example triplet comes closer to the relationship feature of the improvement target element R_a of the reference triplet.

The metric learning controlling unit 103 carries out metric learning such that the relationship feature of the improvement target element R"_a of the negative example triplet moves away from the relationship feature of the improvement target element R_a of the reference triplet.

In the example of FIG. 4, the triplet estimating model 200 estimates that the subject is "man", the object is "ball", and the relationship is "throw" in relation to an inputted image P11. This triplet is regarded as the reference triplet. The inputted image P11 is regarded as the reference training data.

In the reference triplet R that the triplet estimating model 200 estimates in relation to the inputted image P11, the object corresponds to the improvement target element R_a and the subject and the relationship correspond to the not-improved target element R_b. This means that the value of the improvement target element R_a is "ball" and the value the not-improved target element R_b is "man" and "throw".

In the example of FIG. 4, in the triplet R' that the triplet estimating model 200 estimates in relation to an inputted image P12, the subject is estimated to be "man", the object is estimated to be "ball", and the relationship is estimated to be "hit".

Here, the value of the improvement target element R'_a is "ball" and therefore coincides with the value "ball" of the improvement target element R_a of the reference triplet (R_a=R'_a).

On the other hand, the value R'_b of the not-improved target element is a combination of "man" and "hit", and therefore do not coincide with the combination of "man" and "throw" of the improvement target element R_b of the reference triplet (R_b≠R'_b).

Accordingly, the triplet R' that the triplet estimating model 200 estimates in relation to an inputted image P12 is determined (selected) as a positive example.

In the example of FIG. 4, in the triplet R" that the triplet estimating model 200 estimates in relation to an inputted image P13, the subject is estimated to be "man", the object is estimated to be "boomerang", and the relationship is estimated to be "throw".

Here, the value of the improvement target element R"_a is "boomerang" and therefore does not coincide with the value "ball" of the improvement target element R_a of the reference triplet (R_a≠R"_a).

The value R"_b of the not-improved target element is a combination of "man" and "throw", and therefore coincides with the combination of "man" and "throw" of the improvement target element R_b of the reference triplet (R_b=R"_b).

Accordingly, the triplet R" that the triplet estimating model 200 estimates in relation to an inputted image P13 is determined (selected) as a negative example.

The metric learning controlling unit 103 carries out metric learning such that the object feature of the improvement target element R'_a of the positive example triplet comes closer to the object feature of the improvement target element R_a of the reference triplet.

The metric learning controlling unit 103 carries out metric learning such that the object feature of the improvement target element R"_a of the negative example triplet moves away from the object feature of the improvement target element R_a of the reference triplet.

In order to achieve the above metric learning on the triplet estimating model 200, the metric learning controlling unit 103 includes an error calculating unit 104, a metric correct answer data generating unit 105, and a feature metric calculating unit 106 as illustrated in FIG. 1.

The metric correct answer data generating unit 105 generates a correct answer data that makes the metric (distance) between features of an improvement target element for a positive example triplet a value zero(o and also generates a correct answer data that makes the metric between features of the same type for a negative example triplet a value k. The value k is a natural number of one or more and may be k=1, for example.

The metric correct answer data generating unit 105 generates a correct answer data that makes the metric between features of an improvement target element a value zero (0) on the basis of a positive example triplet and also generates a correct answer data that makes the metric between features of the same type a value one (1) on the basis of a negative example triplet.

For example, in the example of FIG. 3 in which an element desired to be improved in the triplet is a relationship, the metric correct answer data generating unit 105 generates correct answer data that makes the metric between features the same in relationship but different in articles zero and also makes the metric between the features the same in articles but different in relationship one. The metric correct answer data generating unit 105 may generate correct answer data that makes the metric between features the same in relationship but different in articles zero and also makes the metric between the features the same in articles but different in relationship one.

The feature metric calculating unit 106 calculates the metric between features.

For example, the feature metric calculating unit 106 may calculate the metric between the subject features, the metric between the object features, and the metric between the relationships of a reference triplet and a positive example triplet. The feature metric calculating unit 106 may also calculate the metric between the subject features, the metric between the object features, and the metric between the relationships of a reference triplet and a negative example triplet.

The feature metric calculating unit 106 may calculate the metric between features in any known method. For example, the feature metric calculating unit 106 may calculate the metric between features by using cosine similarity or an inner product. The metric between features may be a value in a range of zero to the value k both inclusive. The value k may be a natural number, and may be one, for example.

The error calculating unit 104 calculates errors of the results of estimating a subject, an object, and a relationship in a triplet from respective corresponding correct answer labels managed by the correct answer label managing unit 107. The error calculating unit 104 calculates a first error by summing an error in estimating an article and an error in estimating a relationship.

In addition, the error calculating unit 104 calculates a second error based on a correct answer data that the metric correct answer data generating unit 105 generates and a metric that the feature metric calculating unit 106 calculates on the basis of features that the triplet estimating model 200 calculates on the basis of the training data. For example, the error calculating unit 104 calculates the metric between a metric that the feature metric calculating unit 106 calculates and zero to be a second error for a positive example triplet. The error calculating unit 104 calculates the metric between a metric that the feature metric calculating unit 106 calculates and one to be a second error for a negative example triplet.

After that, the error calculating unit 104 calculates a third error by summing the first error and the second error.

The metric learning controlling unit 103 machine-learns (trains) the common feature calculating unit 205, the article feature calculating unit 201, and the relationship feature calculating unit 202, using the third error.

The metric learning controlling unit 103 generates a triplet estimating model 200 (machine learning model) by optimizing one or more parameters of a neural network on the basis of the training data.

For example, the metric learning controlling unit 103 optimizes one or more parameters of the neural network included in the common feature calculating unit 205, the article feature calculating unit 201, and the relationship feature calculating unit 202 by updating the parameters in a direction that the loss function that defines the third error is reduced by using, for example, the gradient descent method.

Furthermore, the metric learning controlling unit 103 may optimize one or more parameters of the neural network included in the common feature calculating unit 205, the article feature calculating unit 201, and the relationship feature calculating unit 202 by updating the parameters in a direction that the loss functions that define the first error and the second error are reduced.

The metric learning controlling unit 103 trains the triplet estimating model 200 such that the second error calculated in the above manner is reduced. This achieves the metric learning such that the metric between the relationship feature an improvement target element R_a of a reference triplet and the relationship feature an improvement target element R'_a of a positive example triplet comes closer. In addition, this also achieves the metric learning such that the metric between the relationship feature an improvement target element R_a of a reference triplet and the relationship feature an improvement target element R"_a of a negative example triplet comes further.

### (B) Operation

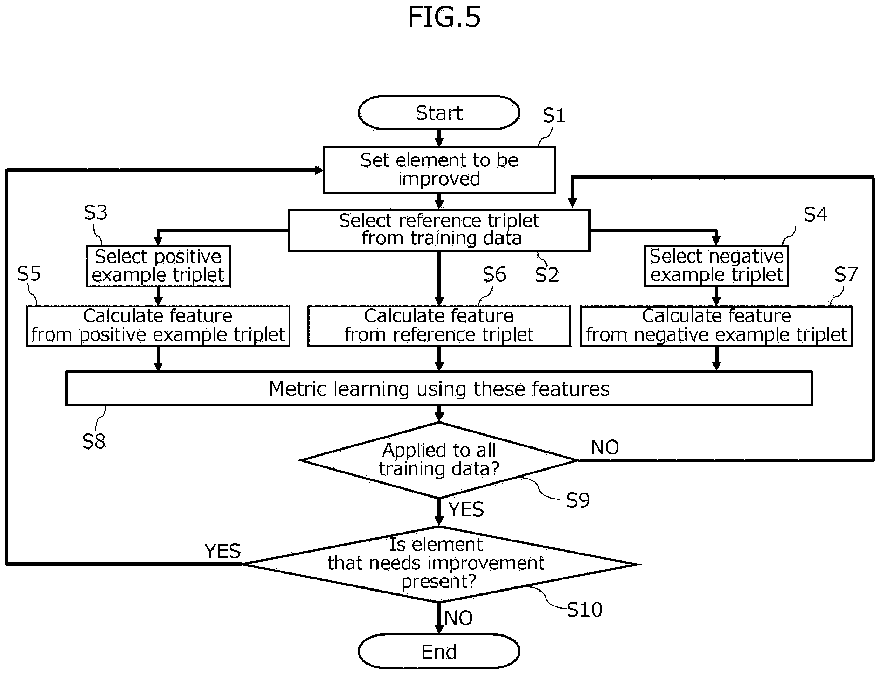

Description will now be made in relation to a process performed by the training processing unit 100 of the information processing apparatus 10 according to one embodiment configured as the above with reference to a flow diagram (Steps S1 to S10) of FIG. 5.

Prior to the process of FIG. 5, the triplet estimating model 200 may be trained in any known method.

In Step S1, the training processing unit 100 sets an improvement target element. An improvement target element may be selected arbitrarily by the user from among the subject, the object, and the relationship or may be selected by the training processing unit 100 using any scheme such as a random number from among the object and relationship.

In step S2, the training processing unit 100 selects a reference triplet from the training data. The reference triplet may be arbitrarily selected.

In Step S3, the training processing unit 100 selects a positive example triplet based on the reference triplet. In Step S4, the training processing unit 100 selects a negative example triplet based on the reference triplet.

In Step S5, the article feature calculating unit 201 calculates article features (i.e. subject feature and object feature) from the positive example triplet. In addition, the relationship feature calculating unit 202 calculates the relationship feature from the positive example triplet.

In Step S6, the article feature calculating unit 201 calculates article features (i.e. subject feature and object feature) from the reference triplet. In addition, the relationship feature calculating unit 202 calculates the relationship feature from the reference triplet.

In Step S7, the article feature calculating unit 201 calculates article features (i.e. subject feature and object feature) from the negative example triplet. In addition, the relationship feature calculating unit 202 calculates the relationship feature from the negative example triplet.

In Step S8, the metric learning controlling unit 103 carries out the metric learning such that the metric between the feature of the improvement target element of the reference triplet and the feature of the improvement target element of the positive example triplet comes close.

In addition the metric learning controlling unit 103 carries out the metric learning such that the metric between the feature of the improvement target element of the reference triplet and the feature of the improvement target element of the negative example triplet comes further.

The error calculating unit 104 calculates errors of the results of estimating a subject, an object, and a relationship in a triplet from respective corresponding correct answer labels managed by the correct answer label managing unit 107. The error calculating unit 104 calculates a first error by summing an error in estimating an article and an error in estimating a relationship.

In addition, the error calculating unit 104 calculates a second error based on a correct answer data (0/1) that the metric correct answer data generating unit 105 generates and a metric that the feature metric calculating unit 106 calculates on the basis of a feature that the triplet estimating model 200 calculates on the basis of the training data.

The error calculating unit 104 calculates a third error by summing the first error and the second error. For example, the metric learning controlling unit 103 optimizes one or more parameters of the neural network included in the common feature calculating unit 205, the article feature calculating unit 201, and the relationship feature calculating unit 202 by updating the parameters in a direction that the loss function that defines the third error is reduced by using, for example, the gradient descent method.

In Step S9, the metric learning controlling unit 103 confirms whether all the training data is applied to training of the triplet estimating model 200.

As a result of the confirmation, if training data not applied to training of the triplet estimating model 200 is left (see NO route in Step S9), the process returns to Step S2 to select a reference triplet from the training data not applied to the training yet.

On the other hand, if all the training data has been applied to training of the triplet estimating model 200 (see YES route in Step S9), the process moves to Step S10.

In Step S10, the metric learning controlling unit 103 confirms whether an element (i.e. not-improved target element) that needs improvement is present in the triplets. For example, the 103 calculates the estimating accuracy of the triplet estimating model 200 of that time. If the calculated accuracy does not satisfy a predetermined criterion, the metric learning controlling unit 103 determines that a not-improved target element is present. An example of the predetermined criterion may be that the estimating accuracy of the triplet estimating model 200 becomes beyond a predetermined level or the improving rate of the estimating accuracy becomes below a predetermined value.

If the current Step S10 is executed for the second or subsequent times and also the calculated accuracy becomes below the accuracy calculated in the previous step S10, the metric learning controlling unit 103 may determine that no not-improved target element is present. In this case, the metric learning controlling unit 103 may adopt the triplet estimating model 200 when the previous Step S10 is performed to be the result of the training. For example, the process of Step S10 may include a process in which the information processing system 1 outputs information including a calculated accuracy onto the screen of the monitor 14a to receive a result determination as to the presence or absence of a not-improved target element from the user.

If an element that needs improvement is present (see YES route in Step S10), the process returns to Step S1 and the element is set to be an improvement target element.

In contrast, if an element that needs improvement is not present (see NO route in Step S10), the process ends.

### (C) Effect:

According to the information processing apparatus 10 of an example of the embodiment, the metric learning controlling unit 103 carries out metric learning such that the relationship feature of the improvement target element R'_a of the positive example triplet is brought closer to the relationship feature of the improvement target element R_a of the reference triplet. In addition, the metric learning controlling unit 103 carries out metric learning such that the relationship feature of the improvement target element R"_a of the negative example triplet moves away from the relationship feature of the improvement target element R_a of the reference triplet.

Thereby, in relation to an improvement target element R_a and a non-improved target element R_b, the feature a from a triplet having the same feature a is brought closer by a positive example triplet which satisfies R_a=R'_a and R_b≠R'_b regardless of a degree of coincidence of the feature b. Besides, the feature a moves away from a triplet having a feature a not coinciding but having a feature b coinciding by a negative example triplet which satisfies R_a≠R"_a and R_b=R"_b.

Simple metric learning on overall feature degrades the accuracy because features effective to estimating of the remaining element are canceled. As a solution to the above, the present information processing apparatus 10 carries out the metric learning only on an improved target element, so that a categorization based on the feature a is facilitated and the bias due to the type information of b in the course of the categorization is reduced.

The metric learning controlling unit 103 carries out the metric learning, regarding a triplet having a common improvement target element and a different not-improved target element as a positive example and also regarding a triplet having a different improvement target element and a common not-improved target element as a negative example. As the above, the accuracy in estimating an improvement target element can be maintained by the metric learning controlling unit 103 carrying out only on a feature of the improvement target element and not carrying out on a not-improved target element.

In addition, the accuracy in estimating a triples not included in the training data can be enhanced. Furthermore, the triplet estimating model 200 can be trained at a low cost without requiring addition of a new data set and generating a synthesized images.

Still further, an unknown combination of an article and a relationship, which are however solely included in learning data but the combination of which is not included in the learning data, which means an unexpected status, can be correctly detected.

### (D) Miscellaneous:

The disclosed techniques are not limited to the embodiment described above, and may be variously modified without departing from the scope of the present embodiment. The respective configurations and processes of the present embodiment can be selected, omitted, and combined according to the requirement.

For example, in the above embodiment, the information processing apparatus 10 functions as the triplet estimating model 200, but the embodiment is not limited to this. Alternatively, the information processing system 1 may further include another information processing apparatus connected to the information processing apparatus 10 via a network and the function of the triplet estimating model 200 may be achieved by the other information processing apparatus.

### [Description of Reference Sign]

- 1: information processing system
- 10: information processing apparatus
- 11: processor (controller)
- 12: memory
- 13: storing device
- 14: graphic processing device
- 14a: monitor
- 15: input interface
- 15a: keyboard
- 15b: mouse
- 16: optical drive device
- 16a: optical disk
- 17: device connecting interface
- 17a: memory device
- 17b: memory reader/writer
- 17c: memory card
- 18: network interface
- 19: bus
- 100: training processing unit
- 101: input image storing unit
- 103: metric learning controlling unit
- 104: error calculating unit
- 105: metric correct data generating unit
- 106: feature metric calculating unit
- 107: correct label managing unit
- 200: triplet estimating model
- 201: article feature calculating unit
- 202: relationship feature calculating unit
- 203: article estimating unit
- 204: relationship estimating unit
- 205: common feature calculating unit

## Claims

1. A training program for causing a computer to execute a process for training an estimator that estimates, from a feature of an entire part of an image, a first label indicating a subject included in the image, a second label indicating an object included in the image, and a third label indicating a relationship between the subject and the object, the process comprising:
determining, among a plurality of pieces of training data to be used for training the estimator, positive example training data having the first label, the second label, and the third label, a particular label of the first label, the second label, and the third label of the positive example training data coinciding with a particular label of reference data included in the plurality of pieces of training data, at least one label of the first label, the second label, and the third label of the positive example training data except for the particular label not coinciding with a corresponding label of the reference data;
determining a negative example training data having the first label, the second label, and the third label among a plurality of pieces of training data, the particular label of the negative example training data not coinciding with the particular label of the reference data and labels of the negative example training data except for the particular label coinciding with corresponding labels of the reference data; and
executing metric learning on the estimator, the metric learning bringing a feature corresponding the particular label calculated in relation to the positive example training data close to a feature corresponding the particular label calculated in relation to the reference data and moving a feature corresponding the particular label calculated in relation to the negative example training data away from the feature corresponding the particular label calculated in relation to the reference data.

2. The training program according to claim 1, wherein the process further comprises:
generating, based on the positive example training data, correct answer data that makes a metric between features corresponding to the particular label zero; and
generating, based on the negative example training data, correct answer data that makes a metric between features corresponding to the particular label one.

3. A computer-implemented method for training an estimator that estimates, from a feature of an entire part of an image, a first label indicating a subject included in the image, a second label indicating an object included in the image, and a third label indicating a relationship between the subject and the object, the method comprising:
determining, among a plurality of pieces of training data to be used for training the estimator, positive example training data having the first label, the second label, and the third label, a particular label of the first label, the second label, and the third label of the positive example training data coinciding with a particular label of reference data included in the plurality of pieces of training data, at least one label of the first label, the second label, and the third label of the positive example training data except for the particular label not coinciding with a corresponding label of the reference data;
determining a negative example training data having the first label, the second label, and the third label among a plurality of pieces of training data, the particular label of the negative example training data not coinciding with the particular label of the reference data and labels of the negative example training data except for the particular label coinciding with corresponding labels of the reference data; and
executing metric learning on the estimator, the metric learning bringing a feature corresponding the particular label calculated in relation to the positive example training data close to a feature corresponding the particular label calculated in relation to the reference data and moving a feature corresponding the particular label calculated in relation to the negative example training data away from the feature corresponding the particular label calculated in relation to the reference data.

4. The computer-implemented method according to claim 3, wherein the method further comprises:
generating, based on the positive example training data, correct answer data that makes a metric between features corresponding to the particular label zero; and
generating, based on the negative example training data, correct answer data that makes a metric between features corresponding to the particular label one.

5. An information processing apparatus for training an estimator that estimates, from a feature of an entire part of an image, a first label indicating a subject included in the image, a second label indicating an object included in the image, and a third label indicating a relationship between the subject and the object, the information processing apparatus comprising:
a controller that
determines, among a plurality of pieces of training data to be used for training the estimator, positive example training data having the first label, the second label, and the third label, a particular label of the first label, the second label, and the third label of the positive example training data coinciding with a particular label of reference data included in the plurality of pieces of training data, at least one label of the first label, the second label, and the third label of the positive example training data except for the particular label not coinciding with a corresponding label of the reference data;
determines a negative example training data having the first label, the second label, and the third label among a plurality of pieces of training data, the particular label of the negative example training data not coinciding with the particular label of the reference data and labels of the negative example training data except for the particular label coinciding with corresponding labels of the reference data; and
executes metric learning on the estimator, the metric learning bringing a feature corresponding the particular label calculated in relation to the positive example training data close to a feature corresponding the particular label calculated in relation to the reference data and moving a feature corresponding the particular label calculated in relation to the negative example training data away from the feature corresponding the particular label calculated in relation to the reference data.

6. The information processing apparatus according to claim 5, wherein the controller
generates, based on the positive example training data, correct answer data that makes a metric between features corresponding to the particular label zero; and
generates, based on the negative example training data, correct answer data that makes a metric between features corresponding to the particular label one.
